# EUROPEAN PATENT APPLICATION

(11) **EP 2 754 644 A1**
(43) Date of publication of application: **16.07.2014**
(21) Application number: 14150594.1
(22) Date of filing: 09.01.2014
(51) Int. Cl.: C02F 1/469, C02F 5/14, C02F 103/02

(54) **Evaporative recirculation cooling water system, method of operating an evaporative recirculation cooling water system and a method of operating a water deionizing system**

(30) Priority: 15.01.2013 NL 2010128
(71) Applicant: Voltea B.V., 2171 AE Sassenheim (NL)
(72) Inventor: van der Wal, Albert, 2341 LP Oegstgeest (NL); Spragg, Aurora Maaike Anne, 2312 JC Leiden (NL); van Limpt, Bart, 2318 AX Leiden (NL); Reinhoudt, Hank Robert, 2241 VZ Wassenaar (NL)
(74) Representative: EP&C

(57) **Abstract**

The invention relates to an evaporative recirculation cooling water system, the system having a recirculation loop to recirculate water through the system, a construction with a space to cool the water in the recirculation loop by evaporation; and a water entry point for providing water into the recirculation loop. The apparatus has an ion removal apparatus for removing ions from the water. The ion removal apparatus has a charge barrier flow through capacitor constructed and arranged for removing ions from the water. The apparatus has a dosing system whereby scale inhibitors are being continuously dosed into the inlet flow into the flow through capacitor.

## Description

### Field of the invention

An evaporative recirculation cooling water system comprising:
a recirculation loop to recirculate water through the system;
a construction with a space to cool the water in the recirculation loop by evaporation;
a water entry point for providing water into the recirculation loop; and,
an ion removal apparatus for removing ions from the water, wherein the ion removal apparatus is provided with a charge barrier flow through capacitor constructed and arranged for removing ions from the water between the water entry point and the recirculation loop.

### Background art

In recent years one has become increasingly aware of the impact of human activities on the environment and the negative consequences this may have. Ways to reduce, reuse and recycle resources are becoming more important. In particular, clean water is becoming a scarce commodity.

An evaporative recirculation cooling water system may receive water from a water make up stream. The water may be used in a recirculation loop and it may receive a heat load from, for example, a heat exchanger. The water may be cooled in an open space e.g. a cooling tower where the water comes in contact with air. The cooling may be enhanced by a partial evaporation of the water in the recirculation loop and this may cause the water to be lost in the recirculation system which requires an intake of water from the make-up stream. The evaporation and the addition of water from the make up stream may cause an accumulation of dissolved species in the water of the recirculation loop. This accumulation of dissolved species may result in scaling in the recirculation system.

US 4,532,045 discloses a chemical ion removal apparatus for removing ions from the make up water to minimize the accumulation of dissolved species. For this purpose the apparatus is provided with an ion exchange system which includes weak acid cation exchange resin. A disadvantage of the use of the weak acid cation exchange resin may be the need for regeneration or replacement of the cation exchange.

JP20022310595 discloses a cooling tower with a reverse osmosis membrane module which can separate cooling water into processed water from which ions are removed and concentrated water with ions. A disadvantage of the use of a membrane may be that it also removes silica ions which are a good corrosion inhibitor and another disadvantage may be that the membrane is sensitive to silica fouling and therefore anti-foulants may be required.

WO2011144704 discloses a cooling tower with a flow through capacitor which removes hardness ions from the water while leaving silica ions in the water. The hardness ions are fed to a waste water stream. The flow through capacitor may function not optimal because of a scaling tendency of the waste water stream of the flow through capacitor.

### Summary

It is an objective to improve the evaporative recirculation cooling water system.

Accordingly the present invention provides: an evaporative recirculation cooling water system comprising:
a recirculation loop to recirculate water through the system;
a construction with a space to cool the water in the recirculation loop by evaporation;
a water entry point for providing water into the recirculation loop; and,
a charge barrier flow through capacitor constructed and arranged for removing ions from the water between the water entry point and the recirculation loop; wherein the system comprises a scale inhibitor dosing system downstream of the water entry point and upstream of the charge barrier flow through capacitor to dose a scale inhibitor into the water flow from the water entry point to the charge barrier flow through capacitor.

A scaling tendency of the waste water stream of the flow through capacitor may be reduced by applying the scale inhibitor. By using the scale inhibitor the concentration of ions in the waste water may be increased. The ratio of purified water w.r.t waste water may thereby be improved.

The flow through capacitor according to the invention may be equipped with charge barriers that are chosen such that they allow limited to no transport of weakly dissociated molecules and / or charged molecules with a weight greater than 200.

The scale inhibitors may be weakly dissociated molecules. The molecules may have a weight between 200 and 20.000, more preferably between 200 and 10.000 and most preferable between 200 and 2.000.

The dosed scale inhibitor may comprise charged scale inhibitors. Charged scale inhibitors may be removed from the water by the flow through capacitor however if the size of the inhibitor is between 200 and 20.000, more preferably between 200 and 10.000 and most preferable between 200 and 2.000 and the charge barrier is constructed to substantially allow no transport of weakly dissociated molecules and / or charged molecules with a molecular weight greater than 200. These weakly dissociated molecules and / or charged scale inhibitor may pass the flow through capacitor without being removed.

The flow through capacitor may be provided between the water entry point and the recirculation loop so as to remove hardness ions from the water of the entry point before providing the water to the recirculation loop. The scale inhibitors are left in the water.

The charge barriers present in the flow through capacitor may cause the dosed scale inhibitor to pass through unhindered. The same feed stream is used for the purification process as well as for the waste process, therefore the concentration of scale inhibitor in the purified stream and in the waste stream is substantially equal to the concentration of scale inhibitor in the feed stream.

The scale inhibitor present in the waste stream will result in a lower scaling tendency for the flow through capacitor. The scale inhibitor present in the purified stream will enter the recirculation loop, where it will result in a lower scaling tendency for the recirculation loop, eliminating the need for additional scale inhibitor dosing.

The system may be provided with a sensor to measure a chemical and/or physical property of the water in the waste water output and/or the purified water output and/or the recirculation loop for example one or more of the pH, alkalinity, the hardness, the conductance of the water, the flow rate of the water and/or the concentration of scale inhibitors.

The ion removal apparatus may be provided with a flow adjuster e.g. a pump for adjusting the velocity of the water flowing through the flow through capacitor.

The system may be provided with a logic circuit that calculates the scaling potential of the waste water and / or the water in the recirculation loop in response to a function of the chemical and / or physical property of the water in the waste water output as measured with the sensor, as well as the water velocity in the charge barrier flow through capacitor.

The system may be provided with a controller that controls the dosing of the scale inhibitor based on the scaling potential of the waste water as determined by the logic circuit.

The system may be provided with a controller that controls the scaling potential in the waste stream by adjusting the flow adjuster.

The scale inhibitor dosing system may be constructed to continuously dose a scale inhibitor in the water from the water entry point.

The invention may relate to a method of operating an evaporative recirculation cooling water system, the method comprising:
recirculating water through a recirculation loop of the evaporative recirculation cooling water system;
cooling the water by evaporation;
adding water from a water entry point to the recirculation loop;
removing ions from the water from the water entry point with a charge barrier flow through capacitor; and,
dosing a scale inhibitor into the water flow from the water entry point to the charge barrier flow through capacitor.

The charge barrier flow through capacitor may comprise a charge barrier substantially not allowing transport of weakly dissociated molecules and / or charged molecules with a molecular weight greater than 200.

The method may comprise dosing a scale inhibitor comprising weakly dissociated molecules.

The method may comprise dosing a scale inhibitor having a molecular weight between 200 and 20.000, more preferably between 200 and 10.000 and most preferable between 200 and 2.000.

The method may comprise dosing a charged scale inhibitor.

The method may comprise continuously dosing a scale inhibitor into the water flow.

According to yet a further embodiment the invention relates to a method of operating a
water deionizing system, the method comprising:
dosing an amount of scale inhibitors into water upstream of a charge barrier flow through capacitor;
removing ions from the water by allowing the water with the dosed amount of scale inhibitor to flow through the charge barrier flow through capacitor while charging the charge barrier flow through capacitor and directing the water from the charge barrier flow through capacitor to the outlet after the hardness ions have been removed. A scaling tendency of the waste water stream of the flow through capacitor may be reduced by applying the scale inhibitor and thereby the required water savings may be reached.

The rate of addition of the scale inhibitor may be dependent on the scaling potential of the charge barrier flow through capacitor waste water.

The rate of addition of the scale inhibitor may be dependent on the scale inhibitor concentration in the charge barrier flow through capacitor waste water.

The scale inhibitor concentration may be between 0.5 and 20 ppm, more preferably between 0.5 and 10 ppm, and most preferably between 1 and 4 ppm.

The dosed scale inhibitor may comprise a charged scale inhibitor.

The dosed scale inhibitor may contain weakly dissociated groups, and / or may have a molecular weight between 200 and 20.000, more preferably between 200 and 10.000 and most preferable between 200 and 2.000.

The scaling potential expressed as LSI is between 1.5 and 4, more preferably between 1.7 and 3.5, and most preferably between 2 and 3.

The charge barrier flow through capacitor may be provided between a water entry point and a recirculation loop and the hardness ions may be removed from the water of the entry point before the water is provided to the recirculation loop, while leaving the scale inhibitor in the water.

The method comprises measuring with a sensor a chemical and/or physical property of the water, the chemical and/or physical property may be one or more of the pH, alkalinity, the hardness, the conductance of the water, the flow rate of the water and/or the concentration of scale inhibitors.

The method comprises:
controlling charging and/or dis-charging of a first and second electrode of the charge barrier flow through capacitor with a controller;
controlling a regulator to direct water to a purified water output during charging of the charge barrier flow through capacitor and to a waste water output during dis-charging of the charge barrier flow through capacitor with the controller, wherein the controller is controlling a flow adjuster so as to adjust the water velocity in the charge barrier flow through capacitor in response to a function of the chemical and/ or physical property of the water in the waste water output and / or the purified water output as measured with the sensor.

The method may comprise: calculating the scaling potential of the waste water in response to a function of the chemical and/or physical property of the water in the waste water output as measured with the sensor, as well as the water velocity in the charge barrier flow through capacitor.

The method may comprise controlling the dosing of the scale inhibitor based on the scaling potential of the waste water as determined by the logic circuit.

These and other aspects, features and advantages will become apparent to those of ordinary skill in the art from reading the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Brief description of the figures

Embodiments of the invention will be described, by way of example only, with reference to the accompanying schematic drawings in which:
Figure 1 shows an evaporative recirculation cooling water system according to the embodiment;
Figure 2 shows the concentration in the waste stream and in the purified stream as measured during a testing period of a scale inhibitors continuously dosed according to the invention; and,
Figure 3 shows the measured differential pressure normalized for the flow through capacitor in three periods, one period according to the embodiment.

### Detailed description

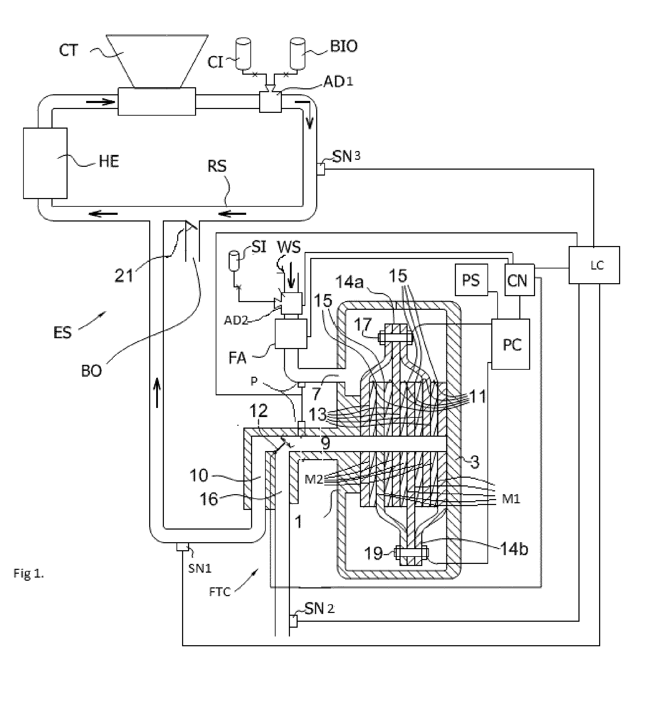

Figure 1 shows an evaporative recirculation cooling water system ES according to the embodiment. The system comprises a water entry point WS to provide water to the recirculation loop RS from, for example, tap water via a flow through capacitor FTC. The recirculation loop RS may comprise a heat exchanger HE which warms the water and a construction e.g. cooling tower CT provided with a space to cool the water. An ion removal apparatus for removing ions e.g. a flow through capacitor FTC may be connected with the recirculation loop RS via an water outlet 9 provided with a regulator e.g. valve 12 to direct the flow of water from the water outlet 9 to the recirculation circuit RS via purified water outlet 10 or to direct the flow of water to a waste water output 16.

A chemical addition system AD2 may be present for providing chemical additives to the water entry point WS.

The flow through capacitor may have a housing comprising a first housing part 1 and a second housing part 3 made of a relatively hard material e.g. a hard plastic. By pressing the first and second housing parts on each other, for example with a bolt and nut (not shown) the housing is made water tight.

The housing may be provided with a water inlet 7 and a water outlet 9. During ion removal of the water, the water will flow from the inlet 7 to the outlet 9 through the spacers 11 which separates a first charge barrier M1 and a first electrode 13 and a second charge barrier M2 and a second electrode 15 of the flow through capacitor from each other. The current collectors 14a and 14b are clamped within the housing and connected to the power converter PC. By creating an electrical potential difference between the first and second electrode by a power converter PC, for example by applying a positive voltage to the first electrode (the anode) 13 and a negative voltage to the second electrode (cathode) 15 the anions of the water flowing through the spacer 11 are attracted to the first electrode and the cations are attracted to the second electrode. In this way ions (anions and cations) may be removed from the water flowing through the spacer 11. The purified water with reduced levels of hardness ions may be discharged to the purified water outlet 10 by the valve 12.

Once the electrodes are saturated with ions the electrodes may be regenerated, whereby the ions will be released in the water in the spacer 11 in between the electrodes. The water in the spacer compartment with the increased ion content will be flushed away by closing the purified water outlet 10 with valve 12 under control of the controller CN and opening the waste water outlet 16. Once most ions are released from the electrodes and the water with increased ion content is flushed away via the waste water outlet 16 the electrodes are regenerated and can be used again for attracting ions.

A power converter PC under control of the controller CN is used to convert the power from the power entry point PS to the right electrical potential. The electrical potential differences between the anode and the cathode are rather low, for example lower than 12 Volt, preferably lower than 6 Volt, even more preferably lower than 2 and most preferably less than 1.5 Volts. It is important that the electrical resistance of the electrical circuit is low. For this purpose, current collectors 14a which are in direct contact with the first electrodes are connected to each other with the first connector 17 and the current collectors 14b which are in direct contact with the second electrodes are connected to each other with the second connector 19. The current collectors 14a and 14b may be made substantially metal free to keep them corrosion free in the wet interior of the housing and at the same time cheap enough for mass production.

The charge barriers M1 and M2 comprise a membrane, selective for anions or cations, or certain specific anions or cations and which may be placed between the electrode and the spacer. The charge barrier may be applied to the high surface area electrode layer as a coating layer or as a laminate layer.

Suitable membrane materials may be homogeneous or heterogeneous. Suitable membrane materials comprise anion exchange and/or cation exchange membrane materials, preferably ion exchange materials comprising strongly dissociating anionic groups and/or strongly dissociating cationic groups. Examples of such membrane materials are Neosepta(TM) range materials (from Tokuyama), the range of PC-SA(TM) and PC-SK(TM) (from PCA GmbH), ion exchange membrane materials ex Fumatech, ion exchange membrane materials Ralex(TM) (from Mega) or the Excellion(TM) range of heterogeneous membrane material (from Snowpure).

The charge barriers M1 and M2 are chosen such that they allow limited to no transport of weakly dissociated molecules and / or charged molecules with a weight greater than 200. The same feed stream is used for the purification process as well as for the waste process, therefore the concentration of scale inhibitor in the purified stream and in the waste stream is substantially equal to the concentration of scale inhibitor in the feed stream.

The electrodes 13, 15 may be produced from a substantially metal free electrically conductive high surface area material, such as activated carbon, carbon black, carbon aerogels, carbon nano fibres, carbon nano tubes, graphene or mixtures thereof, which are placed on both sides of the current collector. The high surface area layer is a layer with a high surface area in square meter per weight of material, for example more than 500 square meter per gram of material. This set-up may ensure that the capacitor works as an electrical double layer capacitor with sufficient ion storage capacity. The overall surface area of even a thin layer of such a material is many times larger than a traditional material like aluminum or stainless steel, allowing many more charged species such as ions to be stored in the electrode material. The ion removal capacity of the apparatus for removal of ions is thereby increased.

A sensor SN1 for measuring a chemical and/ or physical property of the water in the purified water outlet 10 may be included in the system. The sensor SN1 is measuring one or more of the alkalinity, the hardness, the flowrate of the water the conductance of the water, and/or the concentration of scale inhibitors in the purified water outlet 10.

A sensor SN2 for measuring a chemical and/ or physical property of the water in the waste water outlet 16 may be included in the system. The sensor SN2 is measuring one or more of the alkalinity, the hardness, the flow rate of the water, the conductance of the water, and/or the concentration of scale inhibitors in the waste water outlet 16.

A sensor SN3 for measuring a chemical and/ or physical property of the water in the recirculation loop RS may be included in the system. The sensor SN3 is measuring one or more of the alkalinity, the hardness, the flow rate of the water, the conductance of the water, and/or the concentration of scale inhibitors in the recirculation loop RS.

A sensor P for measuring the pressure differential between the water inlet 7 and water outlet 9 of the flow through capacitor may be included in the system.

The ion removal apparatus may be provided with a flow adjuster FA, for example, a pump for adjusting the velocity of the water flowing through the flow through capacitor FTC.

The evaporative recirculation cooling water system may be provided with a first addition device AD1 for providing chemical additives to the recirculation loop RS. The first addition device AD1 may be connected to tanks Cl and BIO to provide corrosion inhibitors and biocides respectively to the water. As depicted the addition device AD1 is adding chemicals to the water in the recirculation loop RS, however the chemicals may also be provided in the water make up stream MS after the FTC. By locating the flow through capacitor FTC between the water entry point WS and the addition device AD, the addition device AD may add the corrosion inhibitors Cl and the biocides BIO after the water has passed the FTC. The chemical additives will therefore not influence or harm the working of the FTC.

The evaporative recirculation cooling water system is provided with a second addition device AD2 for providing chemical additives to the water entry point WS. The second addition device AD2 may be connected to tank SI to provide scale inhibitors to the water. By providing scale inhibitors that are weakly dissociated and / or have a high molecular weight before the flow through capacitor FTC, the scale inhibitor is present in both the water in the purified water outlet 10 as in the water in the waste water outlet 16. As the purified water outlet is feeding the cooling tower recirculation loop RS, the scale inhibitor will also be present in the water in the cooling tower recirculation loop RS. The scale inhibitor will therefore reduce the scaling potential for both the FTC as for the cooling tower.

A logic circuit LC may be connected to sensors SN1 and/or SN2 and/or P as to calculate the scaling potential of the water in the waste water outlet 16 and/or the recirculation loop RS in response to a function of the chemical and / or physical property of the water and/or the scale inhibitor concentration in the waste water outlet 16 and/or the purified water outlet 16, as well as the water velocity in the FTC and/or the pressure drop over the FTC. The sensor inputs may also be obtained from preset values.

A logic circuit LC may be connected to sensor SN3 as to calculate the scaling potential of the water in the recirculation loop RS in response to a function of the chemical and/or physical property of the water and/or the scale inhibitor concentration in the recirculation loop RS.

The scaling potential of the water may be expressed as the Langelier Scaling Index, and the scaling potential of the water may be corrected for the scale inhibitor concentration in the water in the waste water outlet 16 and / or in the recirculation loop RS.

The controller CN may be connected to the addition device AD2 as to adjust the scale inhibitor dosing rate in the water entry point in response to the calculated scaling potential in the water in the waste water outlet 16 and or / in the recirculation loop RS by logic circuit LC. For example if the calculated scaling potential by logic circuit LC is higher than a threshold value the addition device AD2 may increase the dosing rate of the scale inhibitor SI.

The controller CN may be connected to the flow adjuster FA as to adjust the water velocity in the flow through capacitor FTC in response to the calculated scaling potential by logic circuit LC. For example if the calculated scaling potential by logic circuit LC is higher than a threshold value the flow adjuster FA may increase the waste water flow 16 to reduce the scaling potential.

The controller CN may be connected to a power converter PC which is operable connected to the first electrodes 13 via the first connector 17 and the current collectors 14a and with the second electrodes 15 via current collectors 14b and second connector 19. The controller CN may control the power converter PC to apply less or more power to the FTC in response to the calculated scaling potential by logic circuit LC. For example if the calculated scaling potential within the FTC by logic circuit LC is higher than a threshold value the power converter PC may reduce the FTC power to reduce the amount of ions taken up by the flow through capacitor and therefore to reduce the scaling potential within the FTC.

Once the electrodes of the flow through capacitor become saturated with ions the capacitor may be regenerated by going in the regeneration mode by reducing the applied voltage or even reversing the polarity of the electrodes or by shunting the electrical circuit. The energy that is released during the regeneration mode can be recovered and returned to the power entry point PS. This may help to reduce the overall energy consumption of the apparatus for removal of ions. During regeneration the ions released from the electrodes will be release in the water in the flow through capacitor and flushed away to the waste water output 16 by the valve 12. An advantage of the use of the evaporative recirculation cooling water system according to the invention is that less water is needed via the make up water system MS because the concentration of dissolved species in the water of the recirculation loop may be lower with the flow through capacitor.

In evaporative recirculation cooling water system certain chemicals may be added in order to avoid or minimize common problems such as corrosion (rust), deposit formation (in the -warm- heat exchangers and cooling tower packings), and slime formation (due to excessive microbial growth). These chemicals are called corrosion inhibitors, scale inhibitors and microbiocides respectively. By using the flow through capacitor less water will be used from the make up water system MS and flushed to the waste water output 16 so that less chemicals may need to be added.

Corrosion inhibitors are substances which, when added in small amounts to corrosive environments such as recirculating cooling water, reduce the rate of corrosion of the metal piping and heat exchangers present in the cooling system. Corrosion inhibitors may be classified as anodic, cathodic, or both, depending on which portion of the electrochemical corrosion cell they disrupt. Combining cathodic with anodic corrosion inhibitors, provides synergies in corrosion inhibition.

Corrosion inhibitors that may be used in the evaporative recirculation cooling water system according to the invention are phosphates (either orthophopsphate, polyphosphate or combinations thereof), Nitrite, Zinc, Lignosulphonates, Molybdate, Triazoles (Mercaptotriazole, benzotriazole, tollyltriazole), Phosphonates (such as AminoMethylenePhosphonate, HydroxyEthyleneDiPhosphonate, PhosphonoButaneTriCarboxylic Acid, Phosphonosuccinic acid), Tannines, Silicates (both ionic silica and colloidal or polymerized silica) and sarcosinates.

Microbiocides are substances which, when added in small amounts to recirculating cooling water, may reduce the rate of microbial growth in the cooling system, and avoid formation of biofouling (which is causing secondary problems such as Microbially Induced Corrosion or MIC and which is negatively effecting heat exchange efficiency both in cooling towers and heat exchangers). Microbiocides may be classified either as oxidizing or as non-oxidising biocides. Typically, small amounts of more expensive non-oxidising biocides may be combined with larger amounts of less expensive oxidizing biocides. G proteins Microbiocides inhibit microorganisms in a variety of ways. Some of these mechanisms are: altering permeability of the cell wall and/or cell membrane thereby interfering with vital processes of the microbe, destroying or denaturating essential proteins such as proteins involved in energy production of microbes, inhibition of enzyme-substrate reactions, oxidation of protein groups, etc.

Biocides that may be used in the evaporative recirculation cooling water system according to the invention are Microbiocides such as: isothiazolines, bronopol, glutaraldehyde, diethyl-m-toluamide, hydrogenperoxide, chlorinedioxide, bromochlorodimethylhydantoine, bromide activated by bleach (either sodiumbromide or ammonoimbromide), quaternary ammonium salts, THPS (Tetrakis(hydroxymethyl)phosphonium sulfate), sodiumhypochlorite, peracetic acid, DNPA (Dibromonitrilopropionamide).

Scale inhibitors are chemical compounds which, when added in small amounts to flow through capacitors and /or evaporative recirculation cooling water systems, reduce the scaling potential of the water. Some of the mechanisms of scale inhibition are: chelation, where soluble salts are formed from cations and scale inhibitors; dispersion, where increased anionic charge repels crystals, and thus prevents crystallization; crystal modification, where there is buildup of irregular shaped, less adherent crystals; and threshold inhibition, where active crystal growth sites are blocked, preventing further growth.

Scale inhibitors that may be used in the evaporative cooling water system according to the invention must not pass through the charge barrier in the flow through capacitor. Since the same feed stream is used for the purification process as well as for the waste process, the concentration of scale inhibitor in the purified water outlet 10 and in the waste water outlet 16 is substantially equal to the concentration of scale inhibitor in the feed stream in water inlet 7. The dosed scale inhibitor may contain weakly dissociated groups, and / or have a molecular weight between greater than 200 and 20.000, more preferably between 200 and 10.000 and most preferable between 200 and 2.000.

The scale inhibitors that may be used in the evaporative cooling water system according to the invention include scale inhibitors that are weakly dissociated and / or have a high molecular weight. The scale inhibitors may be 2-Phosphonobutane-1,2,4-tricarboxylic acid (PBTC) commercially available as Bayhibit ® AM from Lanxess AG, Germany or a polymaleic acid commercially available as Belclene ® 200 from BioLab Water Additives, United Kingdom.

There are a range of scale inhibitors that may be used for this application, such as: (poly)aspartic acids; acetates; NTA; TDA; (poly)carboxylic acids; STP; citrate; polycarboxylates; polyacrylates mixed with phosphonic acid (1-hydorxyethlyidine) bis(HEPD) & proponoic acids (GE GenGuard ™); other phosphonic acid derivitives (GE Hypersperse™); carbonates; dipicolinic acid; alkyl- and alkenyl succinates; other succinates; THS; TDS; BHMDS; CMOS; ODS; IDS; HIDS; EDTA in combination with acrylic polymers and/or other organic salts (Ashlands Advantage ® Plus, Amersperse ™ and Ameroyal ™ lines);, tetrasodium (1-hydroxyethylidene)bisphosphonates, 2-phosphono-1,2,4 Butanetricarboxylic acids, disodium phosphates and amino-tris-methylene phosphonic acids (GE ScaleTrol™); alkaline compounds with amine-like functionality (Nalco's PermaTreat®); mixes of sodium nitrate and sodium molybate (Nalco 2833);; modified polyacrylic acids (BASF Sokalan ® CP).

If the concentration of hardness ions in the water in the recirculation loop increases because of evaporation then the water may be drained via the blow down port BO. The sensor SN may together with the logic circuit LC be used to determine the scaling potential in the water of the recirculation loop and via controller CN the valve 21 to control the draining of the water may be opened if the scaling potential in the water is too high. The controller CN may control the flow adjuster FA to refresh the water in the recirculation loop with water with a low concentration of hardness ions because the majority of the hardness ions is removed by the FTC.

### Example 1

A scale inhibitor e.g. 2-Phosphonobutane-1,2,4-tricarboxylic acid (PBTC, Bayhibit ® AM) was continuously dosed into a feedstream, to achieve a 5 ppm concentration of active product in the feed stream of an evaporative recirculation cooling water system according to Figure 1. This feed stream was deionized by a charge barrier flow through capacitor where the charge barriers were ion exchange membrane materials (Fumasep FKS and Fumasep FAS, ex Fumatech). The flow through capacitor is set to remove 75 % of the ions in the feed stream. The concentration factor of the flow through capacitor was set to 4.4, meaning that the concentration of salts in the waste stream was set to 4.4 times higher than the concentration of salts in the feed stream. The purified stream was directed into a recirculation loop, containing a space to cool the water in the recirculation loop by evaporation. The concentration factor in this recirculation loop was set to 5, meaning that the concentration of dissolved solids in the recirculation loop is 5 times higher than the concentration of dissolved solids in the purified stream coming from the flow through capacitor. The concentration of hardness and alkalinity in the feed stream and in the purified stream coming from the flow through capacitor was determined with titration, the concentration of Bayhibit ® AM in the feed stream and in the purified stream coming from the flow through capacitor was determined with chromatographic detection of orthophosphate after hydrolysis. The scale inhibitor is substantially not removed from the water in the feed stream.

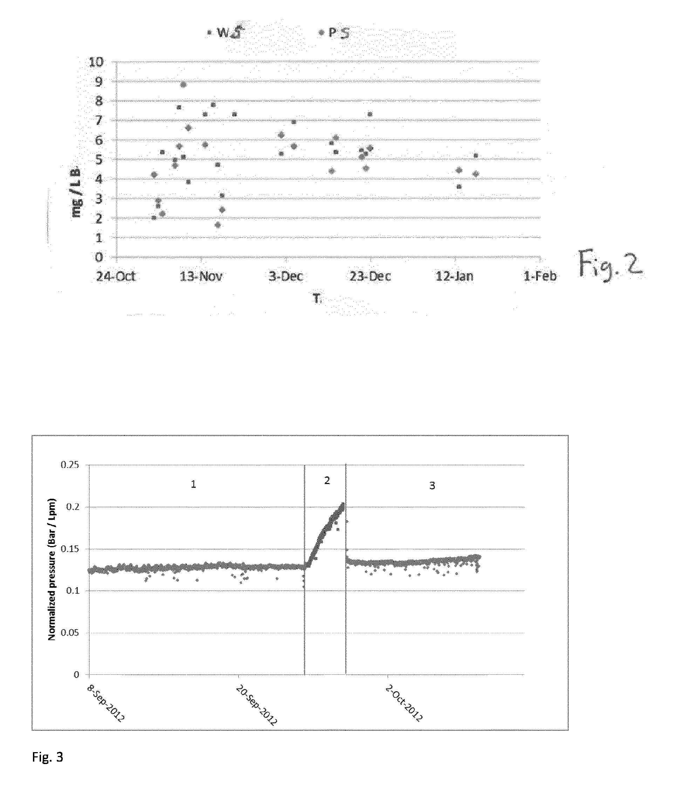

Figure 2 shows the concentration in mg/liter in the waste stream WS and in the purified stream PS as measured during a testing period (t) of a scale inhibitors B e.g. 2-Phosphonobutane-1,2,4-tricarboxylic acid (PBTC, Bayhibit ® AM) continuously dosed according to the invention. It shows the measured concentration of Bayhibit ® AM for the waste stream WS as well as the purified stream PS. The figure shows that the concentration Bayhibit ® AM is substantially equal in the waste stream WS as in the purified stream PS. The scale inhibitor B is substantially not removed from the water in the feed stream leading to substantially equal concentrations in the waste stream WS as in the purified stream PS.

**Table 1 shows the chemical composition of the waste water and purified water stream as measured by sensors SN1 and SN2 in figure 1.**

| **Sensor** | **Alkalinity** | **Hardness** | **pH** | **Conductivity** | **Temperature** | **Bayhibit ® AM** |
|---|---|---|---|---|---|---|
| | (ppm CaCO3) | (ppm CaCO3) | | (uS / cm) | (deg. C) | (ppm) |
| Waste water | 2136 | 907 | 8.27 | 2300 | 25 | 5.3 |
| Purified water | 74.5 | 29.89 | 7.625 | 130.75 | 25 | 5.2 |

The data in table 1 can be transformed into a scaling tendency by using the Langelier Scaling Index, resulting in a LSI of 2.5 for the waste water. The logic circuit linked the LSI to the current dosing rate of Bayhibit, where the concentration was adjusted accordingly by increasing or decreasing the addition of Bayhibit by addition device AD2.

The purified water stream was fed into the cooling tower, which at a cycle of concentration of 10 resulted in a Bayhibit AM concentration of 53 ppm and a conductivity in the cooling tower of 1300 uS / cm. This is monitored by sensor SN3, and via controller CN controlled the valve 21 to control the draining of the water if the scaling potential in the water is too high.

### Example 2

In the evaporative recirculation cooling water system according to example 1, the differential pressure over the flow through capacitor was measured between the inlet and the outlet of the flow through capacitor. Figure 3 shows the measured differential pressure normalized for the flow through capacitor in three periods, the first period being where a scale inhibitor was continuously dosed into the feedstream, according to example 1, the second period being where no scale inhibitor was continuously dosed into the feedstream, the third period being where, after acid cleaning of the module, the concentration factor in the flow through capacitor was reduced to allow for no scale inhibitor dosing.

As can be seen from figure 3, in period 1 the normalized pressure is not increasing, indicating that no scaling occurs in the flow through capacitor due to the dosing of scale inhibitor, which results in low scaling tendency in the flow through capacitor. In period 2 the normalized pressure increases rapidly, indicating that scaling occurs in the flow through capacitor due to the lack of scale inhibitor, resulting in a higher scaling tendency in the flow through capacitor. In period 3, after acid cleaning of the module, the normalized pressure is not significantly increasing, indicating that no scaling occurs in the flow through capacitor due to the decreased concentration factor in the flow through capacitor, which results in lower scaling tendency in the flow through capacitor.

### Example 3

A scale inhibitor e.g. polymaleic acid (Belclene ® 200) was continuously dosed into a feed stream being deionized by a charge barrier flow through capacitor of the evaporative recirculation cooling water system according to Figure 1. The dosing rate is 3 ppm of active product. The FTC removed 90 % of the ions in the feed stream. The concentration factor of the FTC was 8. The concentration factor of the cooling tower was 5. The sensor SN3 is used to determine the calcium, alkalinity and pH of the waste stream. Using the logic circuit, the LSI of the waste stream was determined to be 3. At a LSI of 3 the concentration of Belclene ® 200t was deemed insufficient to prevent scaling, therefore the controller CN increased the dosing rate of the active product to 5 ppm.

### Example 4

A proprietary scale inhibitor was continuously dosed into a feedstream being deionized by a charge barrier flow through capacitor in the evaporative recirculation cooling water system of figure 1. The dosing rate was 10 ppm of active product. The FTC removed 90 % of the ions in the feed stream. The concentration factor of the FTC was 4. The concentration factor of the cooling tower was 5. The sensor SN2 was used to determine the flow rate in the waste stream. The logic circuit predicted the waste stream composition using the predefined ingoing water composition, the FTC removal and the FTC concentration factor, from which it calculated the LSI to be 2. At a LSI of 2 the waste flow rate was deemed too low given the scale inhibitor dosing rate, therefore the controller CN decreased the flow rate of the waste stream to achieve a concentration factor in the FTC of 6.

The descriptions above are intended to be illustrative, not limiting. Thus, it will be apparent to one skilled in the art that modifications may be made to the invention as described without departing from the scope of the claims set out below.

## Claims

1. An evaporative recirculation cooling water system comprising:
a recirculation loop to recirculate water through the system;
a construction with a space to cool the water in the recirculation loop by evaporation;
a water entry point for providing water into the recirculation loop; and,
a charge barrier flow through capacitor constructed and arranged for removing ions from the water between the water entry point and the recirculation loop; wherein the system comprises a scale inhibitor dosing system downstream of the water entry point and upstream of the charge barrier flow through capacitor to dose a scale inhibitor into the water flow from the water entry point to the charge barrier flow through capacitor.

2. The system according to claim 1, wherein the charge barrier flow through capacitor comprises a charge barrier constructed to substantially allow no transport of weakly dissociated molecules and/or charged molecules with a molecular weight greater than 200.

3. The system according to claim 1-2, wherein the scale inhibitor dosing system is constructed to dose a scale inhibitor comprising weakly dissociated groups.

4. The system according to any of claims 1-3, wherein the scale inhibitor dosing system is constructed to dose a scale inhibitor having a molecular weight between 200 and 20.000, more preferably between 200 and 10.000 and most preferable between 200 and 2.000.

5. The system according to any of claims 1 to 3, wherein the scale inhibitor dosing system is constructed to dose a charged scale inhibitor.

6. The system according to claims 1-5, wherein the system is provided with a sensor to measure a chemical and/or physical property of the water in the waste water output and/or the purified water output and/or the recirculation loop for example to measure one or more of the pH, alkalinity, the hardness, the conductance of the water, the flow rate of the water and/or the concentration of scale inhibitors.

7. The system according to any of claims 1-6, wherein the system is provided with a controller, controlling charging and/or dis-charging of a first and second electrode of the charge barrier flow through capacitor; and controlling a regulator to direct water to the purified water output during charging of the charge barrier flow through capacitor and to the waste water output during dis-charging of the charge barrier flow through capacitor, wherein the controller is controlling the flow adjuster so as to adjust the water velocity in the charge barrier flow through capacitor in response to a function of the chemical and/ or physical property of the water in the waste water output and/or the purified water output as measured with the sensor.

8. The system according to any of claims 1-6, wherein the system is provided with a logic circuit that calculates the scaling potential of the waste water in response to a function of the chemical and/or physical property of the water in the waste water output as measured with the sensor, as well as the water velocity in the charge barrier flow through capacitor.

9. The system according to claim 7, wherein the controller controls the dosing of the scale inhibitor based on the scaling potential of the waste water as determined by the logic circuit.

10. The system according to any of claims 1-9, wherein the scale inhibitor dosing system is constructed to continuously dose a scale inhibitor.

11. A method of operating an evaporative recirculation cooling water system, the method comprising:
recirculating water through a recirculation loop of the evaporative recirculation cooling water system;
cooling the water by evaporation;
adding water from a water entry point to the recirculation loop;
removing ions from the water from the water entry point with a charge barrier flow through capacitor; and,
dosing a scale inhibitor into the water flow from the water entry point to the charge barrier flow through capacitor.

12. A method of operating a water deionizing system, the method comprising:
dosing an amount of scale inhibitors into water upstream of a charge barrier flow through capacitor;
removing ions from the water with the dosed amount of scale inhibitor by allowing the water to flow through the charge barrier flow through capacitor while charging the charge barrier flow through capacitor and directing the water from the charge barrier flow through capacitor to the outlet after the hardness ions have been removed.

13. The method according to claim 12, wherein the rate of addition of the scale inhibitor is dependent on the scaling potential of a charge barrier flow through capacitor waste water.

14. The method according to any of claims 12 to 13, wherein the rate of addition of the scale inhibitor is dependent on the scale inhibitor concentration in a charge barrier flow through capacitor waste water.

15. The method according to any of claims 12-14, wherein the scale inhibitor concentration is between 0.5 and 20 ppm, more preferably between 0.5 and 10 ppm, and most preferably between 1 and 4 ppm
